(19) Europäisches Patentamt
European Patent Office
Office européen des brevets

(11) **EP 4 340 051 B1**

(12) **EUROPEAN PATENT SPECIFICATION**

(45) Date of publication and mention of the grant of the patent:
**16.09.2026 Bulletin 2026/38**

(21) Application number: **22935913.8**

(22) Date of filing: **05.12.2022**

(51) International Patent Classification (IPC):
***H01M 4/131** (2010.01)* ***H01M 4/36** (2006.01)*
***H01M 4/525** (2010.01)* ***H01M 4/505** (2010.01)*
***H01M 4/62** (2006.01)* ***H01M 4/1391** (2010.01)*
***H01M 4/04** (2006.01)* ***H01M 10/0525** (2010.01)*
*H01M 4/02 (2006.01)*

(52) Cooperative Patent Classification (CPC):
**H01M 4/0404; H01M 4/131; H01M 4/1391; H01M 4/366; H01M 4/622; H01M 4/623; H01M 4/625; H01M 4/626; H01M 10/0525;**
H01M 2004/021; H01M 2004/028; Y02E 60/10

(86) International application number:
**PCT/KR2022/019558**

(87) International publication number:
**WO 2023/191241 (05.10.2023 Gazette 2023/40)**

(54) **POSITIVE ELECTRODE AND BATTERY INCLUDING THE SAME**

POSITIVELEKTRODE UND BATTERIE DAMIT

ÉLECTRODE POSITIVE ET BATTERIE LA COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.03.2022 KR 20220038663**

(43) Date of publication of application:
**20.03.2024 Bulletin 2024/12**

(73) Proprietor: **LG Energy Solution, Ltd.**
**Seoul 07335 (KR)**

(72) Inventor: **LEE, Hanyoung**
**Daejeon 34122 (KR)**

(74) Representative: **Plasseraud IP**
**104 Rue de Richelieu**
**CS92104**
**75080 Paris Cedex 02 (FR)**

(56) References cited:
**WO-A1-2021/196116**
**JP-A- 2015 210 846**
**JP-A- 2016 004 657**
**JP-A- 2019 029 205**
**KR-A- 20010 020 338**
**KR-A- 20200 142 340**
**KR-A- 20210 033 721**
**US-A1- 2017 092 943**
**US-A1- 2021 091 379**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 340 051 B1

## Description

[Technical Field]

[Cross-Reference to Related Application]

This application claims priority to Korean Patent Application No. 10-2022-0038663, filed on March 29, 2022, in the Korean Intellectual Property Office.

The present invention relates to a positive electrode and a battery including the same, and more particularly, to a positive electrode capable of securing excellent safety without deterioration in battery performance even when an abnormal overcurrent flows and enabling high energy density and high electrode loading by inserting a resin layer at a predetermined position between positive electrode active material layers, and a battery including the positive electrode.

[Background Art]

In general, a lithium secondary battery consists of a positive electrode prepared by coating a metal foil such as an aluminum foil with a positive electrode active material layer, a negative electrode prepared by coating a metal foil such as a copper foil with a negative electrode active material layer, a separator that prevents the positive and negative electrodes from mixing, and an electrolyte that allows lithium ions to move between the positive and negative electrodes.

The method of manufacturing a lithium secondary battery include a winding method and a stacking method, and the stacking method includes a stack and folding method (lamination & stacking method) and a Z folding method (zigzag stacking method).

In the case of the winding method, since a lithium secondary battery is formed by rolling cells, an empty space may be formed, and thus energy density may be low. In addition, when charging and discharging for a long time, distortion and swelling may occur.

On the other hand, in the case of the stacking method, since cells are stacked to form a lithium secondary battery, an empty space may be minimized, and thus energy density may be high and distortion and swelling may be reduced.

In recent years, the use of lithium secondary batteries has been expanded to fields requiring high power, such as electric vehicles. Accordingly, to further increase energy density, a negative electrode loading amount per unit area (g/cm$^2$) and a positive electrode loading amount per unit area (g/cm$^2$) are greatly increased.

However, when the energy density of a lithium secondary battery is excessively increased, an abnormal overcurrent may occur, causing a major accident.

Therefore, there is an urgent need to develop a lithium secondary battery capable of significantly improving output characteristics such as energy density and ensuring safety in an abnormal situation.

Examples of background art can be found in US 2017/092943 A1, WO 2021/196116 A1, US 2021/091379 A1, and JP 2019 029205 A.

[Related Art Documents]

[Patent Documents]

KR 10-2017-0103208 A (Publication date: September 13, 2017)

[Disclosure]

[Technical Problem]

Therefore, the present invention has been made in view of the above problems, and it is one object of the present invention to provide a positive electrode capable of securing excellent safety without deterioration in battery performance even when an abnormal overcurrent flows and enabling high energy density and high electrode loading by inserting a resin layer at a predetermined position between positive electrode active material layers, and a battery including the positive electrode.

The above and other objects can be accomplished by the present invention described below.

[Technical Solution]

I) In accordance with the present invention as defined in the independent claim 1, provided is a positive electrode including a current collector for positive electrodes; a first positive electrode active material layer coated on an upper portion of the current collector for positive electrodes; a resin layer coated on an upper portion of the first positive electrode active material layer; and a second positive electrode active material layer coated on an upper portion of the resin layer.

IV) In I) the resin layer includes a base resin, a conductive material, and an adhesive.

V) In I) the resin layer comprises 30 to 80 % by weight of the base resin, 15 to 50 % by weight of the conductive material, and 5 to 20 % by weight of the adhesive.

VII) In I) the base resin includes one or more selected from the group consisting of polyethylene, polypropylene, and polyethylene vinyl acetate.

VIII) The conductive material may preferably include carbon or a metal.

IX) In I), the adhesive includes one or more selected from the group consisting of polyvinylidene fluoride, polyvinyl alcohol, carboxymethyl cellulose (CMC), starch, hydroxypropyl cellulose, recycled cellulose, polyvinylpyrrolidone, polytetrafluoroethylene, ethylene-propylene-diene terpolymer (EPDM), sulfonated EPDM, styrene butadiene rubber, and fluorine rubber.

X) In I) to IX), the first and second positive electrode active material layers may preferably include a high-nickel positive electrode active material.

XI) In I) to X), the high-nickel active material may be preferably an NCM-based or NCMA-based positive electrode active material.

XII) In I) to XI), the positive electrode may have a loading amount of preferably 10 $mg/cm^2$ or more, wherein the loading amount is defined as a weight per unit area of a positive electrode active material coated on a positive electrode current collector.

XIII) In accordance with the present invention as defined in the independent claim 6, provided is a method of preparing a positive electrode, the method including coating an upper portion of a current collector for positive electrodes with a first positive electrode active material layer; coating an upper portion of the first positive electrode active material layer with a resin layer; and coating an upper portion of the resin layer with a second positive electrode active material layer.

XIV) In accordance with the present invention as defined in independent claim 7, provided is a battery including the positive electrode according to I) to XIII); a negative electrode including a current collector for negative electrodes and a negative electrode active material layer coated on an upper portion of the current collector; and a separator.

XV) In I) to XIV), the negative electrode may have a loading amount of preferably 10 $mg/cm^2$ or more, wherein the loading amount is defined as a weight per unit area of a negative electrode active material coated on a negative electrode current collector.

[Advantageous Effects]

According to the present invention, the present invention has an effect of providing a positive electrode capable of securing excellent safety without deterioration in battery performance even when an abnormal overcurrent flows and enabling high energy density and high electrode loading by inserting a resin layer at a predetermined position between positive electrode active material layers, and a battery including the positive electrode.

[Description of Drawings]

FIG. 1 is a cross-sectional view of a positive electrode according to the present invention.

FIG. 2 is a schematic diagram for explaining the principle that the conductive network of a resin layer according to the present invention is maintained by a conductive material under a regular condition (marked as regular condition) and the conductive network is destroyed by melting and expansion of a base resin (marked as Thermoplastic resin) under an abnormal high-temperature condition (marked as Higher temp. condition).

FIG. 3 includes a cross-sectional view (a) of a battery without a resin layer according to the present invention and a cross-sectional view (b) of a battery including a resin layer according to the present invention inserted between positive electrode active material layers.

[Best Mode]

The present inventors confirmed that, when a predetermined resin layer was inserted into a predetermined position between positive electrode active material layers in a secondary battery of high electrode loading, resistance was increased without deterioration in battery performance when an abnormal overcurrent flowed, and accidents were

prevented. Based on these results, the present inventors conducted further studies to complete the present invention.

Hereinafter, a positive electrode and a battery including the same according to the present invention are separately described in detail.

Unless otherwise defined, all technical and scientific terms used in this description have the same meaning as commonly understood by those of ordinary skill in the art to which the present invention pertains.

Positive electrode

The positive electrode of the present invention includes a current collector for positive electrodes, a first positive electrode active material layer coated on the upper portion of the current collector for positive electrodes, a resin layer coated on the upper portion of the first positive electrode active material layer, and a second positive electrode active material layer coated on the upper portion of the resin layer. In this case, excellent safety is secured without deterioration in battery performance even when an abnormal overcurrent suddenly flows, and high energy density and high electrode loading may be possible.

In an embodiment not being a part of current invention, when the thickness of the first positive electrode active material layer is T1, the thickness of the second positive electrode active material layer is T2, and the thickness of the resin layer is Tr, T1, T2, and Tr may preferably satisfy Equation 1 below. Within this range, battery performance and safety may be excellent.

[Equation 1]

$$Tr < T1 \leq T2$$

According to the invention, the positive electrode satisfys Equation 1a below. Within this range, battery performance and safety may be excellent.

[Equation 1a]

$$Tr < T1 < T2$$

In the positive electrode, the first positive electrode active material layer has a thickness of 50 to 120 μm, the second positive electrode active material layer has a thickness of 80 to 150 μm, and the resin layer has a thickness of 5 to 50 μm. Within this range, battery performance and safety may be excellent.

According to the invention, the sum of the thicknesses of the first and second positive electrode active material layers is 130 μm to 200 μm. Within this range, battery performance and safety may be excellent.

According to the invention, the resin layer includes a base resin, a conductive material, and an adhesive. In this case, battery performance and safety may be excellent, and durability and output characteristics may be excellent due to excellent adhesion to the positive electrode active material layer.

The resin layer includes 30 to 80 % by weight of the base resin, 15 to 50 % by weight of the conductive material, and 5 to 20 % by weight of the adhesive. Within this range, battery performance and safety may be excellent, and durability may be excellent due to excellent adhesion to the positive electrode active material layer.

The base resin may have a melting temperature of preferably 60 to 180 °C, more preferably 70 to 170 °C, still more preferably 75 to 160 °C, as a specific example, 70 to 140 °C or 110 to 170 °C, and the volume thereof may expand upon melting. Within this range, excellent safety may be secured without deterioration in battery performance even when an abnormal overcurrent suddenly flows, and high energy density and high electrode loading may be possible.

In the present disclosure, the melting temperature may be measured by a method or device commonly used in the art to which the present invention pertains. For example, the melting temperature may be measured by DSC analysis. As a specific example, the melting temperature may correspond to the maximum point of the endothermic peak measured at the time of the second heating after the first heating and cooling under a nitrogen atmosphere at a rate of 10 °C/min using a differential scanning calorimeter (DSC, model name: DSC 2920, manufacturer: TA instrument).

The base resin includes one or more selected from the group consisting of polyethylene, polypropylene, and polyethylene vinyl acetate. In this case, balance between battery performance and safety may be excellent.

For example, the conductive material may include a conductive carbon-based material or a conductive metal material, preferably a conductive carbon-based material. In this case, in a normal state, a conductive network operates well in the resin layer, but in an abrupt abnormal state, the conductive network is immediately disrupted to secure safety.

As a specific example, the conductive material may include one or more selected from the group consisting of graphite such as natural graphite, artificial graphite, graphene and so on; carbon black such as acetylene black, Ketjen black, channel black, furnace black, lamp black, thermal black and so on; conductive fiber such as carbon fiber, metal fiber

and so on; conductive tubes such as carbon nanotubes and so on; fluorocarbon; conductive metal powder such as aluminum powder, nickel powder and so on; conductive whiskers such as zinc oxide whiskers, potassium titanate whiskers and so on; conductive metal oxides such as titanium oxide and so on; and conductive organic compounds such as polyphenylene derivatives and so on, preferably a conductive carbon-based material.

The adhesive includes one or more selected from the group consisting of polyvinylidene fluoride, polyvinyl alcohol, carboxymethyl cellulose (CMC), starch, hydroxypropyl cellulose, recycled cellulose, polyvinylpyrrolidone, polytetrafluoroethylene, ethylene-propylene-diene terpolymer (EPDM), sulfonated EPDM, styrene butadiene rubber, and fluorine rubber. In this case, battery performance and safety may be excellent, and durability and output characteristics may be excellent due to excellent adhesion to the positive electrode active material layer.

The first and second positive electrode active material layers may be preferably a high-nickel positive electrode active material, more preferably an NCM-based or NCMA-based positive electrode active material. In this case, even at high energy densities or high electrode loads, excellent safety may be secured without deterioration in battery performance even when an abnormal overcurrent suddenly flows.

In the present disclosure, the high-nickel positive electrode active material may be preferably a high-nickel positive electrode active material having a Ni content of 65 mol% or more based on the total weight of metal elements thereof.

As another example, the positive electrode active material may be a compound represented by Chemical Formula 1 below:

[Chemical Formula 1] $Li_aNi_xMn_yCo_zM_wO_{2+\delta}$

In Chemical Formula 1, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$.

For example, the positive electrode may have a loading amount of 10 mg/cm$^2$ or more. In this case, the loading amount is defined as the weight per unit area of a positive electrode active material coated on a positive electrode current collector. Preferably, the positive electrode has a loading amount of 20 mg/cm$^2$ or more, more preferably 30 mg/cm$^2$ or more, still more preferably 50 mg/cm$^2$ or more, still more preferably 60 mg/cm$^2$ or more. The upper limit value is not particularly limited, and for example, the positive electrode may a loading amount of 200 mg/cm$^2$ or less, preferably 180 mg/cm$^2$ or less, more preferably 160 mg/cm$^2$ or less. Within this range, battery performance and safety effects according to the present invention may be maximized.

Current collectors for positive electrodes commonly used in the art to which the present invention pertains may be used as the current collector for positive electrodes of the present invention without particular limitation. For example, metal foil for positive electrodes, as a specific example, aluminum foil may be used.

For example, each of the first and second positive electrode active material layers may further include a conductive material and/or a binder.

Conductive materials for positive electrodes commonly used in the art to which the present invention pertains may be used as the conductive material of the present invention without particular limitation. Unless otherwise specified, the following conductive materials for negative electrodes may be included. For example, the conductive material may include a conductive metal material or a conductive carbon-based material, preferably a conductive carbon-based material, as a specific example, carbon black, graphene, carbon nanotubes, or graphite.

Binders for positive electrodes commonly used in the art to which the present invention pertains may be used as the binder of the present invention without particular limitation. For example, the binder may be a polymer binder, preferably polyvinylidene fluoride (PVdF), acrylonitrile-butadiene rubber (NBR), or a mixture thereof, more preferably polyvinylidene fluoride.

When necessary, the first and second positive electrode active material layers may further include a thickener, a surfactant, and/or a solvent commonly used in the art to which the present invention pertains.

Hereinafter, specific embodiments will be described in detail with reference to the accompanying drawings.

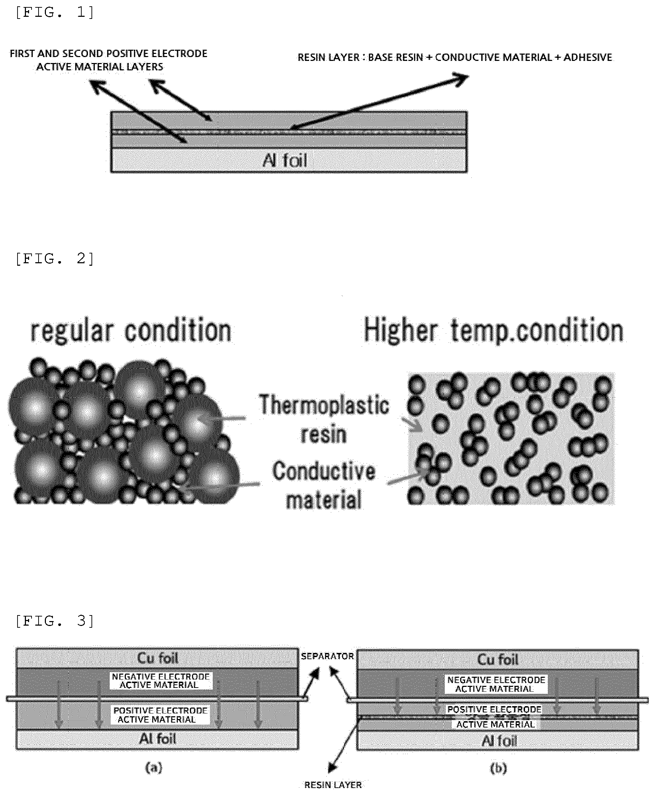

FIG. 1 below is a cross-sectional view of a positive electrode according to an embodiment of the present invention.

Referring to FIG. 1, a positive electrode including positive electrode active material layers and a resin layer inserted therebetween is prepared by coating the upper portion of aluminum foil having a thickness of 15 to 20 $\mu$m, which a current collector for positive electrodes, with a first positive electrode active material layer; coating the upper portion of the first positive electrode active material layer with a resin layer including a base resin, a conductive material, and an adhesive; and coating the upper portion of the resin layer with a second positive electrode active material layer.

FIG. 2 below is a schematic diagram showing that the conductive network of a resin layer according to the present invention is maintained by a conductive material under a regular condition and the conductive network is destroyed by melting and expansion of a base resin under an abnormal high-temperature condition, i.e., the base resin acts as a resistor.

Referring to FIG. 2, the left image schematically shows the cross-section of the resin layer under a regular

condition. Under the regular condition, the base resin is contracted and fixed inside the resin layer, and the conductive material forms a conductive network to connect an upper portion (the second positive electrode active material layer; not shown) and a lower portion (the first positive electrode active material layer; not shown). On the other hand, the right image schematically shows the cross-section of the resin layer under an abnormal high-temperature condition. Under the abnormal condition, as the base resin melts and expands inside the resin layer, the conductive network is disrupted, breaking the conductive connection between the upper portion (the second positive electrode active material layer; not shown) and the lower portion (the first positive electrode active material layer; not shown).

Method of preparing positive electrode

A method of preparing a positive electrode according to the present invention includes a step of coating the upper portion of a current collector for positive electrodes with a first positive electrode active material layer; a step of coating the upper portion of the first positive electrode active material layer with a resin layer; and a step of coating the upper portion of the resin layer with a second positive electrode active material layer. In this case, battery performance is excellent, and a secondary battery capable of securing excellent safety even when an abnormal overcurrent suddenly flows is provided.

For example, the step of coating the upper portion of a current collector for positive electrodes with a first positive electrode active material layer is a step of coating the current collector for positive electrodes with a slurry including a positive electrode active material, a conductive material, a binder, and a solvent. In this case, coating methods commonly used in the art to which the present invention pertains may be used without particular limitation. For example, a strip continuous coating method or a roll-to-roll method may be used. In this case, electrodes may be prepared economically. As the solvent, an organic solvent, water, or a mixture thereof may be used. As a specific example, the solvent may include one or more selected from the group consisting of N-methylpyrrolidone (NMP), dimethylacetamide, dimethylformamide, dimethyl carbonate, acetone, methanol, ethanol, and water.

As a specific example, the slurry for forming the first positive electrode active material layer may be prepared by mixing 85 to 98 % by weight of a positive electrode active material (e.g., $LiNi_{0.6}Mn_{0.2}Co_{0.2}O_2$, etc.), 1 to 10 % by weight of a conductive material (e.g., carbon black, etc.), and 1 to 10 % by weight of a binder (e.g., PVdF, etc.) based on a total weight of the positive electrode active material, the conductive material, and the binder in a solvent (e.g., NMP, etc.).

The amount of the solvent used may be determined without particular limitation within a range commonly used in the art to which the present invention pertains. For example, the amount of the solvent may be determined in consideration of the coating thickness of the slurry, manufacturing yield, and the like. More specifically, the solvent may be used in an amount capable of dissolving or dispersing the positive electrode active material, the conductive material, and the binder, and then uniformly coating the current collector for positive electrodes.

Preferably, the step of coating the upper portion of a current collector for positive electrodes with a first positive electrode active material layer may further include a step of performing drying after the coating.

For example, the step of coating the upper portion of the first positive electrode active material layer with a resin layer is a step of coating the upper portion of the first positive electrode active material layer with a slurry including a base resin, a conductive material, and a solvent. Coating methods commonly used in the art to which the present invention pertains may be used without particular limitation. For example, a strip continuous coating method or a roll-to-roll method may be used. In this case, a solvent capable of preparing a slurry by mixing a base resin and a conductive material may be used as the solvent of the present invention without particular limitation. Preferably, the solvent may include one or more selected from the group consisting of acetone, methyl ethyl ketone, N-methyl pyrrolidone, dimethylacetamide, and dimethylformamide.

As a specific example, the slurry for forming the resin layer is prepared by mixing 30 to 80 % by weight of a base resin (e.g., polyethylene, etc.), 15 to 50 % by weight of a conductive material (e.g., carbon black, etc.), and 5 to 20 % by weight of an adhesive (e.g., PVdF, etc.) based on a total weight of the base resin, the conductive material, and the adhesive in a solvent (e.g., water, etc.). In this case, the base resin, the conductive material, and the adhesive may be separately added to the solvent and mixed. Alternatively, the conductive material and the adhesive may be added to a base resin dispersion solution (e.g., polyethylene dispersion solution, etc.) containing the base resin and the solvent and mixed.

Preferably, the step of coating the upper portion of the first positive electrode active material layer with a resin layer may further include a step of performing drying after coating with the resin layer.

For example, the step of coating the upper portion of the resin layer with a second positive electrode active material layer is a step of coating the resin layer with a slurry including a positive electrode active material, a conductive material, a binder, and a solvent. In this case, coating methods commonly used in the art to which the present invention pertains may be used without particular limitation. For example, a strip continuous coating method or a roll-to-roll method may be used. In this case, the components of the second positive electrode active material layer may be used in the range of the components of the first positive electrode active material layer. For example, the components of the second positive electrode active material layer may be the same as those of the first positive electrode active material layer.

As a specific example, the slurry for forming the second positive electrode active material layer may be prepared

by mixing 85 to 98 % by weight of a positive electrode active material (e.g., $LiNi_{0.6}Mn_{0.2}Co_{0.2}O_2$, etc.), 1 to 10 % by weight of a conductive material (e.g., carbon black, etc.), and 1 to 10 % by weight of a binder (e.g., PVdF, etc.) based on a total weight of the positive electrode active material, the conductive material, and the binder in a solvent (e.g., NMP, etc.).

Preferably, the step of coating the upper portion of the resin layer with a second positive electrode active material layer may further include a step of performing drying after coating with the second positive electrode active material layer.

For example, after coating with the first positive electrode active material layer, coating with the resin layer, and/or coating with the second positive electrode active material layer, the drying may be performed at 100 to 140 °C, preferably 110 to 130 °C, more preferably 115 to 125 °C, still more preferably 120 °C in a vacuum oven.

For example, the method of preparing a positive electrode may include a step of performing pressing after coating with the first positive electrode active material layer, coating with the resin layer, and/or coating with the second positive electrode active material layer.

For example, the method of preparing a positive electrode may include a step of cutting a positive electrode plate into a predetermined size after coating with the second positive electrode active material layer.

Negative electrode

A negative electrode of the present invention may include a metal foil and a negative electrode active material layer coated thereon, and the negative electrode active material layer may include a negative electrode active material, and may further include a conductive material and/or a binder, when necessary.

The negative electrode may have a loading amount of 10 $mg/cm^2$ or more. In this case, the loading amount is defined as the weight per unit area of a negative electrode active material coated on a negative electrode current collector. Preferably, the negative electrode has a loading amount of 20 $mg/cm^2$ or more, more preferably 30 $mg/cm^2$ or more, still more preferably 50 $mg/cm^2$ or more, still more preferably 60 $mg/cm^2$ or more. The upper limit value is not particularly limited, and for example, the negative electrode may have a loading amount of 200 $mg/cm^2$ or less, preferably 180 $mg/cm^2$ or less, more preferably 160 $mg/cm^2$ or less. Within this range, battery performance and safety effects according to the present invention may be maximized.

Current collectors for negative electrodes commonly used in the art to which the present invention pertains may be used as the current collector for negative electrodes of the present invention without particular limitation. For example, metal foil for negative electrodes, as a specific example, copper foil may be used.

The negative electrode active material preferably includes a silicon-based active material. Silicon-based active materials commonly used in the art to which the present invention pertains may be used as the silicon-based active material of the present invention without particular limitation. As a specific example, the silicon-based active material may include one or more selected from the group consisting of Si, $SiO_x$ ($0<x<2$), and SiC.

Conductive materials used in the art to which the present invention pertains may be used as the conductive material of the present invention without particular limitation. For example, the conductive material includes a conductive carbon-based material or a conductive metal material. As a specific example, the conductive material may include one or more selected from the group consisting of graphite such as natural graphite, artificial graphite, and graphene; carbon black such as acetylene black, Ketjen black, channel black, furnace black, lamp black, and thermal black; conductive fiber such as carbon fiber and metal fiber; conductive tubes such as carbon nanotubes; fluorocarbon; conductive metal powder such as aluminum powder and nickel powder; conductive whiskers such as zinc oxide whiskers and potassium titanate whiskers; conductive metal oxides such as titanium oxide; and conductive organic compounds such as polyphenylene derivatives, preferably a conductive carbon-based material.

Binders for negative electrodes used in the art to which the present invention pertains may be used as the binder of the present invention without particular limitation. For example, the binder may include an SBR-based binder, a PVdF-based binder, or a mixture thereof.

As a specific example, the PVdF-based binder may include one or more selected from the group consisting of poly(vinylidene fluoride-co-hexafluoropropylene) (PVdF-HFP), poly(vinylidene fluoride-co-trichloroethylene) (PVdF-TCE), poly(vinylidene fluoride-co-chlorotrifluoroethylene) (PVdF-CTFE), poly(vinylidene fluoride-co-tetrafluoroethylene) (PVdF-TFE), and poly(vinylidene fluoride-co-trifluoroethylene) (PVdF-TrFE).

As a specific example, the SBR-based binder may include one or more selected from the group consisting of styrene-butadiene rubber (SBR) and acrylated styrene-butadiene rubber.

When necessary, the negative electrode active material layer may further include a thickener, a surfactant, and/or a solvent commonly used in the art to which the present invention pertains.

Method of preparing negative electrode

A method of preparing a negative electrode according to the present invention may include a step of coating the upper portion of a current collector for negative electrodes with a negative electrode active material layer.

For example, the step of coating the upper portion of a current collector for negative electrodes with a negative electrode active material layer is a step of coating an current collector for negative electrodes with a slurry including a negative electrode active material, a conductive material, a binder, and a solvent. In this case, coating methods commonly used in the art to which the present invention pertains may be used without particular limitation. For example, a strip continuous coating method or a roll-to-roll method may be used. In this case, the negative electrode may be prepared economically. Here, the solvent may be, for example, an organic solvent, water, or a mixture thereof. As a specific example, the solvent may include one or more selected from the group consisting of N-methylpyrrolidone (NMP), dimethylacetamide, dimethylformamide, dimethyl carbonate, acetone, methanol, ethanol, and water.

Current collectors for negative electrodes commonly used in the art to which the present invention pertains may be used as the current collector for negative electrodes of the present invention without particular limitation. For example, copper foil, as a specific example, copper foil having a thickness of 15 to 20 μm may be used.

As a specific example, the slurry for forming a negative electrode active material layer may be prepared by mixing 85 to 98 % by weight of a negative electrode active material (e.g., artificial graphite, etc.), 1 to 10 % by weight of a conductive material (e.g., carbon black, etc.), and 1 to 10 % by weight of a binder (e.g., SBR, etc.) based on a total weight of the negative electrode active material, the conductive material, and the binder in a solvent (e.g., distilled water, etc.).

The amount of the solvent used may be determined without particular limitation within a range commonly used in the art to which the present invention pertains. For example, the amount of the solvent may be determined in consideration of the coating thickness of the slurry, manufacturing yield, and the like. More specifically, the solvent may be used in an amount capable of dissolving or dispersing the negative electrode active material, the conductive material, and the binder, and then uniformly coating the current collector for negative electrodes.

For example, in the step of coating the upper portion of a current collector for negative electrodes with a negative electrode active material layer, since drying is performed immediately after coating with the negative electrode active material layer, a separate drying process may be omitted. However, when the boiling point (bp) of the solvent used is high, a step of performing drying at a temperature equal to or higher than the boiling point of the solvent after coating with the negative electrode active material layer to remove the solvent may be further included.

For example, the drying may be performed at 100 to 140 °C, preferably 110 to 130 °C, more preferably 115 to 125 °C, still more preferably 120 °C in a vacuum oven.

For example, the method of preparing a negative electrode may include a step of performing pressing after coating with the negative electrode active material layer.

For example, the method of preparing a negative electrode may include a step of cutting a negative electrode plate into a predetermined size after coating with the negative electrode active material layer.

Secondary battery

A secondary battery of the present invention includes the positive electrode according to the present invention; a negative electrode including a current collector for negative electrodes and a negative electrode active material layer coated on the upper portion of the current collector; and a separator. In this case, at high energy densities and high electrode loads, excellent safety is secured even when an abnormal overcurrent suddenly flows.

Separators commonly used in the art to which the present invention pertains may be used as the separator of the present invention without particular limitation. Preferably, a separator having a processing diameter of 0.01 to 10 μm and a thickness of 5 to 300 μm may be used. As a specific example, olefinic polymers, such as polypropylene, and sheets or non-woven fabrics made of glass fiber, polyethylene, or the like may be used as the separator. In this case, high ion permeability, mechanical strength, insulation, chemical resistance, and hydrophobicity may be obtained.

In the present disclosure, the process diameter may be measured by a measurement method commonly used in the art to which the present invention pertains.

For example, the secondary battery may include an electrolyte, and the electrolyte may include an organic solvent and a lithium salt.

For example, the organic solvent may be an aprotic solvent. As a specific example, the organic solvent may include one or more selected from the group consisting of N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, and ethyl propionate.

For example, the lithium salt may include one or more selected from the group consisting of LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, and $(CF_3SO_2)_2NLi$.

For example, the secondary battery may be manufactured by accommodating/sealing an electrode assembly formed by alternately stacking the positive and negative electrodes and the separator together with the electrolyte in an

exterior material such as a battery case.

The secondary battery may preferably be used as a power source for electric vehicles, hybrid electric vehicles, plug-in hybrid electric vehicles, and power storage systems.

Method of manufacturing secondary battery

A method of manufacturing a secondary battery according to the present invention includes a step of laminating a negative electrode and a separator; and a step of laminating a positive electrode on the separator. A method of preparing the positive electrode includes a step of coating the upper portion of a current collector for positive electrodes with a first positive electrode active material layer; a step of coating the upper portion of the first positive electrode active material layer with a resin layer; and a step of coating the upper portion of the resin layer with a second positive electrode active material layer. In this case, a secondary battery capable of securing excellent safety even when an abnormal overcurrent suddenly flows at high energy densities and high electrode loads may be provided.

For example, the step of laminating a negative electrode and a separator may be a step of manufacturing a mono cell of separator/negative electrode/separator by laminating a separator on both sides of a negative electrode.

For example, the step of laminating a positive electrode on the separator may be a step of manufacturing a half-cell of separator/negative electrode/separator/positive electrode by laminating a positive electrode on one surface of the manufactured mono cell.

For example, the method of manufacturing a secondary battery may include a step of manufacturing a stack cell by stacking and attaching a plurality of manufactured half-cells and finishing with the mono cell.

For example, the method of manufacturing a secondary battery may include a step of putting the stack cell into a battery case, injecting an electrolyte thereto, and then sealing the battery case. As a specific example, the electrolyte may be a solution prepared by dissolving 1 M $LiPF_6$ in a solvent obtained by mixing ethylene carbonate, ethyl methyl carbonate, and diethyl carbonate in a weight ratio of 1:1:1.

Description of the positive electrode, the negative electrode, the separator, the electrolyte, and the like are the same as those described above, and thus the description thereof is omitted.

Hereinafter, specific embodiments will be described in detail with reference to the accompanying drawings.

FIG. 3 below includes a cross-sectional view (a) of a battery without a resin layer according to the present invention and a cross-sectional view (b) of a battery including a resin layer according to the present invention inserted between positive electrode active material layers.

Referring to FIG. 3, the right image corresponds to the secondary battery according to the present invention. In an abnormal overcharging situation, when a large amount of current flows in the direction of the arrow, temperature increases rapidly. Accordingly, the resin layer inserted into the positive electrode active material layers serves as a resistor as shown in FIG. 2 , and charging is performed only in the second positive electrode active material layer, thereby greatly improving the safety of the secondary battery. In the secondary battery according to the present invention, the first positive electrode active material layer, the resin layer, the second positive electrode active material layer, the separator, the negative electrode active material layer, and copper foil as the current collector for negative electrodes are sequentially laminated on aluminum foil as the current collector for positive electrodes.

On the other hand, the left image of FIG. 3 corresponds to a comparative example of the secondary battery according to the present invention. Since the resin layer is not included between the positive electrode active material layers, in an abnormal overcharging situation, when a large amount of current flows in the direction of the arrow, current and temperature may increase rapidly due to the lack of means to immediately cut off the overcurrent, which may cause major accidents such as fire and explosion.

In describing the positive electrode, the negative electrode, the secondary battery, and the methods of preparing the positive electrode, the negative electrode, and the secondary battery according to the present invention, it should be noted that other conditions, processes, or equipment not explicitly described herein may be appropriately selected within the range commonly practiced in the art without particular limitation.

Overcharge and performance tests

When an overcharge test, a lifespan performance test, and an output performance test were performed on the positive electrode of the present invention and the secondary battery including the same, it was confirmed that safety was secured without deterioration of battery performance even when an abnormal overcurrent flows, and high energy density and high electrode loading were possible.

Overcharge tests disclosed in the art to which the present invention pertains may be used in the present invention without particular limitation. As a specific example, charging is performed up to a charging voltage (4.25 V) at 0.3 C, and charging is performed with 0.05 C cutoff. Then, after a 3-hour rest period is given to stabilize the voltage, overcharging is performed up to 6.4 V at 1C. Next, an overcharge test is performed based on increase (%) in remaining capacity (State Of

Charge) up to an overcharge end voltage. At this time, when increase in the remaining capacity is reduced, that is, when electrical resistance is rapidly increased, it means that a secondary battery has excellent safety even when an abnormal overcurrent flows.

Based on the results of the overcharge test, in the case of the positive electrode according to the present invention and the battery including the same (example), by including the resin layer at a predetermined position between the positive electrode active material layers, excellent safety is secured even when overcharged. On the other hand, in the case of a positive electrode not including the resin layer according to the present invention and a battery including the same (comparative example), when overcharging, resistance does not increase rapidly and remaining capacity continues to increase, which may cause accidents.

Lifespan performance tests disclosed in the art to which the present invention pertains may be used in the present invention without particular limitation. As a specific example, after performing charge/discharge 50 times under conditions of 0.5 C/0.5 C within a driving voltage range of 2.5 to 4.2 V at room temperature (25 °C), capacity retention rate (%) is calculated using Equation 3 below. As the capacity retention rate increases, lifespan performance increases.

$$\text{Capacity retention rate (\%)} = (\text{Discharge capacity after 50 cycles}/\text{Discharge capacity after 1 cycle}) \times 100 \quad \text{[Equation 3]}$$

Based on the results of the lifespan performance test, it can be confirmed that the lifespan performance of the positive electrode including the resin layer according to the present invention and the battery including the positive electrode (example) does not degrade compared to the positive electrode not including the resin layer according to the present invention and the battery including the positive electrode (comparative example).

Output performance tests disclosed in the art to which the present invention pertains may be used in the present invention without particular limitation. As a specific example, after measuring a voltage difference generated by discharging at 1C-rate for 10 seconds under conditions of room temperature (25 °C) and SOC of 50 %, resistance is calculated using Equation 4 below. As the resistance increases, output performance increases.

[Equation 4]

$$R\ (\text{resistance}) = (V_{max} - V_{min})/I$$

(In Equation 4, I means current.)

Based on the results of the output performance test, it can be confirmed that the output performance of the positive electrode including the resin layer according to the present invention and the battery including the positive electrode (example) does not degrade compared to the positive electrode not including the resin layer according to the present invention and the battery including the positive electrode (comparative example).

## Claims

**1.** A positive electrode, comprising:

a current collector for positive electrodes;
a first positive electrode active material layer coated on an upper portion of the current collector for positive electrodes;
a resin layer coated on an upper portion of the first positive electrode active material layer; and
a second positive electrode active material layer coated on an upper portion of the resin layer,
wherein the resin layer comprises 30 to 80 % by weight of a base resin, 15 to 50 % by weight of a conductive material, and 5 to 20 % by weight of an adhesive,
wherein the base resin comprises one or more selected from the group consisting of polyethylene, polypropylene, and polyethylene vinyl acetate,
wherein the adhesive comprises one or more selected from the group consisting of polyvinylidene fluoride, polyvinyl alcohol, carboxymethyl cellulose (CMC), starch, hydroxypropyl cellulose, recycled cellulose, polyvinylpyrrolidone, polytetrafluoroethylene, ethylene-propylene-diene terpolymer (EPDM), sulfonated EPDM, styrene butadiene rubber, and fluorine rubber, and
wherein, when a thickness of the first positive electrode active material layer is T1, a thickness of the second positive electrode active material layer is T2, and a thickness of the resin layer is Tr, T1, T2, and Tr satisfy Equation 1a below:

[Equation 1a]

$$Tr < T1 < T2$$

wherein T1 is 50 to 120 μm, T2 is 80 to 150 μm, and Tr is 5 to 50 μm, and
wherein the sum of T1 and T2 is 130 μm to 200 μm.

**2.** The positive electrode according to claim 1, wherein the conductive material comprises carbon or a metal.

**3.** The positive electrode according to claim 1, wherein the first and second positive electrode active material layers comprise a high-nickel positive electrode active material.

**4.** The positive electrode according to claim 3, wherein the high-nickel active material is an NCM-based or NCMA-based positive electrode active material.

**5.** The positive electrode according to claim 1, wherein the positive electrode has a loading amount of 10 mg/cm$^2$ or more, wherein the loading amount is defined as a weight per unit area of a positive electrode active material coated on a positive electrode current collector.

**6.** A method of preparing a positive electrode, comprising:

coating an upper portion of a current collector for positive electrodes with a first positive electrode active material layer;
coating an upper portion of the first positive electrode active material layer with a resin layer; and
coating an upper portion of the resin layer with a second positive electrode active material layer,
wherein the resin layer comprises 30 to 80 % by weight of a base resin, 15 to 50 % by weight of a conductive material, and 5 to 20 % by weight of an adhesive,
wherein the base resin comprises one or more selected from the group consisting of polyethylene, polypropylene, and polyethylene vinyl acetate,
wherein the adhesive comprises one or more selected from the group consisting of polyvinylidene fluoride, polyvinyl alcohol, carboxymethyl cellulose (CMC), starch, hydroxypropyl cellulose, recycled cellulose, polyvinylpyrrolidone, polytetrafluoroethylene, ethylenepropylene-diene terpolymer (EPDM), sulfonated EPDM, styrene butadiene rubber, and fluorine rubber, and
wherein, when a thickness of the first positive electrode active material layer is T1, a thickness of the second positive electrode active material layer is T2, and a thickness of the resin layer is Tr, T1, T2, and Tr satisfy Equation 1a below:

[Equation 1a]

$$Tr < T1 < T2$$

wherein T1 is 50 to 120 μm, T2 is 80 to 150 μm, and Tr is 5 to 50 μm, and
wherein the sum of T1 and T2 is 130 μm to 200 μm.

**7.** A battery, comprising:

the positive electrode according to any one of claims 1 to 5;
a negative electrode comprising a current collector for negative electrodes and a negative electrode active material layer coated on an upper portion of the current collector; and
a separator.

**8.** The battery according to claim 7, wherein the negative electrode has a loading amount of 10 mg/cm$^2$ or more, wherein the loading amount is defined as a weight per unit area of a negative electrode active material coated on a negative electrode current collector.

## Patentansprüche

1. Positive Elektrode, umfassend:

   einen Stromsammler für positive Elektroden;
   eine erste Aktivmaterialschicht für eine positive Elektrode, die auf einen oberen Abschnitt des Stromsammlers für positive Elektroden aufgetragen ist;
   eine Harzschicht, die auf einen oberen Abschnitt der ersten Aktivmaterialschicht für eine positive Elektrode aufgetragen ist; und
   eine zweite Aktivmaterialschicht für eine positive Elektrode, die auf einen oberen Abschnitt der Harzschicht aufgetragen ist,
   wobei die Harzschicht 30 bis 80 Gew.-% Basisharz, 15 bis 50 Gew.-% leitfähiges Material und 5 bis 20 Gew.-% Haftmittel enthält,
   wobei das Basisharz eines oder mehrere, ausgewählt aus der Gruppe bestehend aus Polyethylen, Polypropylen und Polyethylenvinylacetat, enthält,
   wobei das Haftmittel eines oder mehrere, ausgewählt aus der Gruppe bestehend aus Polyvinylidenfluorid, Polyvinylalkohol, Carboxymethylcellulose (CMC), Stärke, Hydroxypropylcellulose, recycelter Cellulose, Polyvinylpyrrolidon, Polytetrafluorethylen, Ethylen-Propylen-Dien-Terpolymer (EPDM), sulfoniertem EPDM, Styrol-Butadien-Kautschuk und Fluorkautschuk, enthält, und
   wobei, wenn eine Dicke der ersten Aktivmaterialschicht für eine positive Elektrode T1 ist, eine Dicke der zweiten Aktivmaterialschicht für eine positive Elektrode T2 ist und eine Dicke der Harzschicht Tr ist, T1, T2 und Tr die nachstehende Gleichung 1a erfüllen:

   [Gleichung 1a]

   $$\mathrm{Tr} < \mathrm{T1} < \mathrm{T2}$$

   wobei T1 50 bis 120 μm beträgt, T2 80 bis 150 μm beträgt und Tr 5 bis 50 μm beträgt, und wobei die Summe von T1 und T2 130 μm bis 200 μm beträgt.

2. Positive Elektrode nach Anspruch 1, wobei das leitfähige Material Kohlenstoff oder ein Metall enthält.

3. Positive Elektrode nach Anspruch 1, wobei die erste und die zweite Aktivmaterialschicht für eine positive Elektrode ein nickelreiches Aktivmaterial für eine positive Elektrode enthalten.

4. Positive Elektrode nach Anspruch 3, wobei es sich bei dem nickelreichen Aktivmaterial um ein Aktivmaterial für eine positive Elektrode auf NCM-Basis oder NCMA-Basis handelt.

5. Positive Elektrode nach Anspruch 1, wobei die positive Elektrode eine Beladungsmenge von 10 mg/cm$^2$ oder mehr aufweist, wobei die Beladungsmenge als ein Gewicht pro Flächeneinheit eines auf einem Stromsammler für eine positive Elektrode aufgetragenen Aktivmaterials für eine positive Elektrode definiert ist.

6. Verfahren zur Herstellung einer positiven Elektrode, umfassend:

   Auftragen einer ersten Aktivmaterialschicht für eine positive Elektrode auf einen oberen Abschnitt eines Stromsammlers für positive Elektroden;
   Auftragen einer Harzschicht auf einen oberen Abschnitt der ersten Aktivmaterialschicht für eine positive Elektrode; und
   Auftragen einer zweiten Aktivmaterialschicht für eine positive Elektrode auf einen oberen Abschnitt der Harzschicht,
   wobei die Harzschicht 30 bis 80 Gew.-% Basisharz, 15 bis 50 Gew.-% leitfähiges Material und 5 bis 20 Gew.-% Haftmittel enthält,
   wobei das Basisharz eines oder mehrere, ausgewählt aus der Gruppe bestehend aus Polyethylen, Polypropylen und Polyethylenvinylacetat, enthält,
   wobei das Haftmittel eines oder mehrere, ausgewählt aus der Gruppe bestehend aus Polyvinylidenfluorid, Polyvinylalkohol, Carboxymethylcellulose (CMC), Stärke, Hydroxypropylcellulose, recycelter Cellulose, Polyvinylpyrrolidon, Polytetrafluorethylen, Ethylen-Propylen-Dien-Terpolymer (EPDM), sulfoniertem EPDM, Styrol-Butadien-Kautschuk und Fluorkautschuk, enthält, und

wobei, wenn eine Dicke der ersten Aktivmaterialschicht für eine positive Elektrode T1 ist, eine Dicke der zweiten Aktivmaterialschicht für eine positive Elektrode T2 ist und eine Dicke der Harzschicht Tr ist, T1, T2 und Tr die nachstehende Gleichung 1a erfüllen:

[Gleichung 1a]

$$Tr < T1 < T2$$

wobei T1 50 bis 120 μm beträgt, T2 80 bis 150 μm beträgt und Tr 5 bis 50 μm beträgt, und wobei die Summe von T1 und T2 130 μm bis 200 μm beträgt.

**7.** Batterie, umfassend:

die positive Elektrode nach einem der Ansprüche 1 bis 5;
eine negative Elektrode, die einen Stromsammler für negative Elektroden und eine Aktivmaterialschicht für eine negative Elektrode umfasst, die auf einen oberen Abschnitt des Stromsammlers aufgetragen ist; und
einen Separator.

**8.** Batterie nach Anspruch 7, wobei die negative Elektrode eine Beladungsmenge von 10 mg/cm$^2$ oder mehr aufweist, wobei die Beladungsmenge als ein Gewicht pro Flächeneinheit eines auf einem Stromsammler für eine negative Elektrode aufgetragenen Aktivmaterials für eine negative Elektrode definiert ist.

**Revendications**

**1.** Électrode positive, comprenant :

un collecteur de courant pour électrodes positives ;
une première couche de matériau actif d'électrode positive déposée sur une partie supérieure du collecteur de courant pour électrodes positives ;
une couche de résine déposée sur une partie supérieure de la première couche de matériau actif d'électrode positive ; et
une seconde couche de matériau actif d'électrode positive déposée sur une partie supérieure de la couche de résine,
dans laquelle la couche de résine comprend de 30 à 80 % en poids d'une résine de base, de 15 à 50 % en poids d'un matériau conducteur, et de 5 à 20 % en poids d'un adhésif,
dans laquelle la résine de base comprend un ou plusieurs éléments sélectionnés dans le groupe constitué par le polyéthylène, le polypropylène et le poly(acétate de vinyle-éthylène),
dans laquelle l'adhésif comprend un ou plusieurs éléments sélectionnés dans le groupe constitué par le poly(fluorure de vinylidène), l'alcool polyvinylique, la carboxyméthylcellulose (CMC), l'amidon, l'hydroxypropylcellulose, la cellulose recyclée, la polyvinylpyrrolidone, le polytétrafluoroéthylène, le terpolymère éthylène-propylène-diène (EPDM), l'EPDM sulfoné, le caoutchouc de styrène-butadiène et le caoutchouc fluoré, et
dans laquelle, lorsqu'une épaisseur de la première couche de matériau actif d'électrode positive est T1, une épaisseur de la seconde couche de matériau actif d'électrode positive est T2, et une épaisseur de la couche de résine est Tr, T1, T2, et Tr satisfont l'Équation 1a ci-dessous :

[Équation 1a]

$$Tr < T1 < T2$$

dans laquelle T1 est de 50 à 120 μm, T2 est de 80 à 150 μm, et Tr est de 5 à 50 μm, et dans laquelle la somme de T1 et T2 est de 130 μm à 200 μm.

**2.** Électrode positive selon la revendication 1, dans laquelle le matériau conducteur comprend du carbone ou un métal.

**3.** Électrode positive selon la revendication 1, dans laquelle les première et seconde couches de matériau actif d'électrode positive comprennent un matériau actif d'électrode positive à haute teneur en nickel.

**4.** Électrode positive selon la revendication 3, dans laquelle le matériau actif à haute teneur en nickel est un matériau actif d'électrode positive à base de NCM ou à base de NCMA.

**5.** Électrode positive selon la revendication 1, dans laquelle l'électrode positive a une quantité de charge de 10 mg/cm$^2$ ou plus, dans laquelle la quantité de charge est définie comme un poids par unité de surface d'un matériau actif d'électrode positive déposé sur un collecteur de courant d'électrode positive.

**6.** Procédé de préparation d'une électrode positive, comprenant :

le dépôt d'une première couche de matériau actif d'électrode positive sur une partie supérieure d'un collecteur de courant pour électrodes positives ;
le dépôt d'une couche de résine sur une partie supérieure de la première couche de matériau actif d'électrode positive ; et
le dépôt d'une seconde couche de matériau actif d'électrode positive sur une partie supérieure de la couche de résine,
dans lequel la couche de résine comprend de 30 à 80 % en poids d'une résine de base, de 15 à 50 % en poids d'un matériau conducteur, et de 5 à 20 % en poids d'un adhésif,
dans lequel la résine de base comprend un ou plusieurs éléments sélectionnés dans le groupe constitué par le polyéthylène, le polypropylène et le poly(acétate de vinyle-éthylène),
dans lequel l'adhésif comprend un ou plusieurs éléments sélectionnés dans le groupe constitué par le poly(fluorure de vinylidène), l'alcool polyvinylique, la carboxyméthylcellulose (CMC), l'amidon, l'hydroxypropylcellulose, la cellulose recyclée, la polyvinylpyrrolidone, le polytétrafluoroéthylène, le terpolymère éthylène-propylène-diène (EPDM), l'EPDM sulfoné, le caoutchouc de styrène-butadiène et le caoutchouc fluoré, et
dans lequel, lorsqu'une épaisseur de la première couche de matériau actif d'électrode positive est T1, une épaisseur de la seconde couche de matériau actif d'électrode positive est T2, et une épaisseur de la couche de résine est Tr, T1, T2, et Tr satisfont l'Équation 1a ci-dessous :

[Équation 1a]

$$\mathrm{Tr} < \mathrm{T1} < \mathrm{T2}$$

dans lequel T1 est de 50 à 120 μm, T2 est de 80 à 150 μm, et Tr est de 5 à 50 μm, et dans lequel la somme de T1 et T2 est de 130 μm à 200 μm.

**7.** Batterie, comprenant :

l'électrode positive selon l'une quelconque des revendications 1 à 5 ;
une électrode négative comprenant un collecteur de courant pour électrodes négatives et une couche de matériau actif d'électrode négative déposée sur une partie supérieure du collecteur de courant ; et
un séparateur.

**8.** Batterie selon la revendication 7, dans laquelle l'électrode négative a une quantité de charge de 10 mg/cm$^2$ ou plus, dans laquelle la quantité de charge est définie comme un poids par unité de surface d'un matériau actif d'électrode négative déposé sur un collecteur de courant d'électrode négative.

[FIG. 1]

FIRST AND SECOND POSITIVE ELECTRODE ACTIVE MATERIAL LAYERS
RESIN LAYER : BASE RESIN + CONDUCTIVE MATERIAL + ADHESIVE
Al foil

[FIG. 2]

regular condition
Higher temp.condition
Thermoplastic resin
Conductive material

[FIG. 3]

Cu foil
NEGATIVE ELECTRODE ACTIVE MATERIAL
POSITIVE ELECTRODE ACTIVE MATERIAL
Al foil
(a)
SEPARATOR
Cu foil
NEGATIVE ELECTRODE ACTIVE MATERIAL
POSITIVE ELECTRODE
ACTIVE MATERIAL
Al foil
(b)
RESIN LAYER

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220038663
- US 2017092943 A1
- WO 2021196116 A1
- US 2021091379 A1
- JP 2019029205 A
- KR 1020170103208 A